# EUROPÄISCHE PATENTANMELDUNG

(11) **EP 1 043 108 A2**
(43) Veröffentlichungstag der Anmeldung: **11.10.2000**
(21) Anmeldenummer: 99890401.5
(22) Anmeldetag: 22.12.1999
(51) Int. Cl.: B23K 10/02, H05H 1/26

(54) **Einrichtung zum Plasmaschweissen**

(30) Priorität: 01.04.1999 AT 199 U
(71) Anmelder: Inocon Technologie Gesellschaft m.b.H, 4800 Attnang-Puchheim (AT)
(72) Erfinder: Schwankhart, Gerhard, Dipl.-Ing., 4800 Attnang-Puchheim (AT)
(74) Vertreter: Kliment, Peter

(57) **Zusammenfassung**

Einrichtung zum Plasmaschweißen mit einem Schweißbrenner (11, 11') mit einer von Plasmagas durchströmbaren Düse (16, 16'), die aus einem elektrisch gut leitenden Material hergestellt ist und konzentrisch zu einer gegenüber der Düse (16, 16') elektrisch isolierten Elektrode (19, 19') angeordnet ist, die mit einem Pol einer Gleichspannungsquelle (200) verbunden ist, und einem mit dem zweiten Pol der Gleichspannungsquelle (200) verbunden Anschluß für ein zu verschweißendes Werkstück (138) aufweist, wobei noch eine HF-Zündeinrichtung (135) mit der Elektrode (19, 19') und dem Werkstück (138) in Verbindung steht: Um einen für den Schweißbrenner schonenden Betrieb zu und ein sicheres Zünden ermöglichen, ist vorgesehen, daß die Düse (16, 16') über einen hochohmigen elektrischen Widerstand (1R2) mit dem zweiten Pol der Gleichspannungsquelle (200) verbunden ist.

## Beschreibung

Die Erfindung bezieht sich auf eine Einrichtung gemäß dem Oberbegriff des Anspruches 1.

Eine solche Einrichtung wurde z.B. durch die DE 27 01 254 A bekannt. Bei dieser Einrichtung ist ein Pol der Gleichspannungsquelle direkt mit dem Werkstück und über einen niederohmigen widerstand mit der elektrisch gut leitenden Düse verbunden ist. Dabei dient der niederohmige Widerstand, dessen Wert nur ca. 3 Ohm beträgt, zur Begrenzung des Stromes über einen Pilotlichtbogen zwischen der Elektrode und der Düse, der einen Hauptlichtbogen zwischen der Elektrode und dem zu verschweißenden Werkstück zündet.

Solche Einrichtungen werden hauptsächlich für die Aufbringung einer Pulverbeschichtung auf ein Werkstück verwendet. Dabei ist es ergibt sich aufgrund des relativ hohen Stromflusses über den im wesentlichen ständig brennenden Pilotlichtbogen eine hohe thermische Belastung des Brenners.

Bei den meisten Einrichtungen zum Plasmaschweißen ist lediglich die Elektrode des Schweißbrenners, die meist als Kathode geschaltet ist, und das Werkstück mit der Gleichspannungsquelle und der HF-Zündeinrichtung verbindbar.

Im Betrieb wird bei in einem geringen Abstand von dem Werkstück gehaltener Elektrode mittels der Zündeinrichtung ein Pilotlichtbogen gezündet, der dann zum Zünden eines für die Erzeugung von Plasma ausreichenden Lichtbogen zündet. Dabei wird nach dem Zünden des Lichtbogens die Zündeinrichtung wieder abgeschaltet.

Dabei ergibt sich jedoch, insbesondere bei Verwendung von Helium als Plasmagas, das Problem, daß der Abstand zwischen der Elektrode und dem Werkstück nur sehr klein sein darf, um eine Zündung zu ermöglichen. Aufgrund der erforderlichen kleinen Abstände kann es aber durch Unregelmäßigkeiten an der Oberfläche des Werkstückes oder durch Aufschäumen des Schmelzbades zur Ausbildung von Kurzschlüssen kommen, durch die die Qualität der Schweißung beeinträchtigt wird und die auch zu einer Überlastung des Schweißbrenners führen. Um nun mit etwas größeren Abständen zünden zu können muß die Zündenergie entsprechend hoch sein, was jedoch nur mit einem sehr Aufwand realisiert werden kann.

Ziel der Erfindung ist es, diese Nachteile zu vermeiden und eine Einrichtung de eingangs erwähnten Art vorzuschlagen, die sich durch einen einfachen Aufbau auszeichnet und mit der mit relativ geringen Zündenergien auch bei Verwendung von Helium mit größeren Abständen zwischen der Elektrode und dem Werkstück ein sicheres Zünden gewährleistet werden kann.

Erfindungsgemäß wird dies bei einer Einrichtung der eingangs erwähnten Art durch die kennzeichnenden Merkmale des Anspruches 1 erreicht.

Durch die vorgeschlagenen Maßnahmen wird eine Ionisierung des aus der Düse ausströmenden Plasmagases im Bereich zwischen der Elektrode und der Düse aufgrund eines HF-Überschlages und damit zur Zündung eines Lichtbogens zwischen der Elektrode und dem Werkstück aufgrund der angelegten Gleichspannung. Dabei ergibt sich auch eine sehr weitgehende Schonung des Plasmabrenners, da dieser nicht von dem sonst üblichen Pilotlichtbogen belastet ist, der durch den hohen Widerstand über den die Düse mit der Spannungsquelle verbunden ist, verhindert ist.

Durch den hochohmigen widerstand ist lediglich eine spannungsmäßige Kopplung der Düse mit dem Werkstück gegeben, doch kann sich kein nennenswerter Stromfluß über die düse zur Elektrode ausbilden.

Durch die Ionisierung aufgrund des HF-Überschlages, der die Düse thermisch nur sehr wenig beansprucht, ist es auch bei Verwendung von Helium als Plasmagas möglich, selbst über größere Abstände zwischen der Elektrode und dem Werkstück von z.B. 10mm problemlos zu zünden.

Durch die Merkmale des Anspruches 2 ergibt sich der Vorteil, daß der Plasmastrahl von dem aus der kegelmantelförmigen Düse ausströmenden Plasmagas eingeschnürt wird und sich daher ein sehr kleiner Brennfleck auf dem Werkstück ergibt. Dadurch ergibt sich eine entsprechend große Schweißtiefe und es kann auch bei einem relativ geringen Energieeinsatz mit einer relativ hohen Schweißgeschwindigkeit gearbeitet werden.

Die Erfindung wird nun anhand der Zeichnung näher erläutert. Dabei zeigen:
Fig. 1 schematisch einen Schnitt durch einen Halter mit Plasmaerzeuger eines erfindungsgemäßen Gerätes,
Fig. 2 einen Schnitt im vergrößerten Maßstab durch den Plasmaerzeuger nach der Fig. 1,
Fig. 3 einen Schnitt durch einen weitere Ausführungsform eines Halters mit einem Plasmaerzeuger nach einer weiteren Ausführungsform eines erfindungsgemäßen Gerätes,
Fig. 4 eine Draufsicht auf den Halter samt Plasmaerzeuger nach der Fig. 3,
Fig. 5 einen Schnitt durch den Plasmaerzeuger nach der Fig. 3 und 4 in vergrößertem Maßstab,
Fig. 6 einen Schnitt durch die Kühlmittelkammer des Anoden-Kontaktteiles und
Fig. 7 einen Schnitt durch die Zentrierhülse.

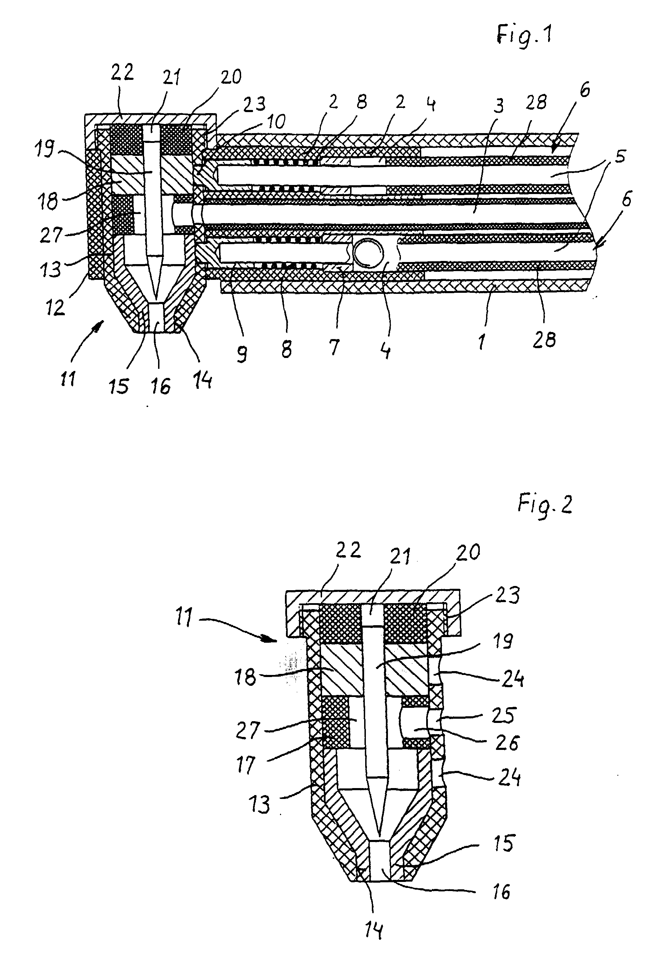

Bei der Ausführungsform nach den Fig. 1 und 2 ist ein aus einem elektrisch isolierenden Material, wie z.B. Keramik hergestellter im wesentlichen hohlzylindrischer Halter 1 vorgesehen, in dessen einem Endbereich ein ebenfalls aus einem Isoliermaterial hergestellter Einsatz 2 eingepreßt ist.

Dieser Einsatz 2 ist von einem zentralen, eine Gaszuführleitung 3 bildenden Rohr durchsetzt, das an der Stirnseite des über die Stirnseite des Halters 1 vorragenden Einsatzes 2 endet. Weiters weist der Einsatz 2 noch zwei in einer Diametralebene liegende Bohrungen 4, in denen als Widerlager dienende Einpreßteile 7 gehalten sind, die ihrerseits von den Seelen 5 von Anschlußleitungen 6 mit Spiel durchsetzt sind.

Diese Anschlußleitungen 6 sind an eine nicht dargestellte Spannungsversorgung angeschlossen, die geeignet ist, neben dem für die durchzuführenden Arbeiten erforderlichen Betriebsstrom auch die für die Zündung des Plasmas erforderlichen Zündimpulse zu liefern.

An diesen Einpreßteilen 7 stützen sich Druckfedern 8 ab, die Kontaktstifte 9, die mit den Seelen 5 verlötet sind, nach außen drängen. Dabei sind die Kontaktstifte 9 an ihrem freien Ende mit einem stirnseitigen Ansatz 10 versehen, der mit einer Kontaktfläche eines Plasmaerzeugers 11 zusammenwirkt, der in einer an der Stirnseite des Halters 1 angeordneten Befestigungseinrichtung 23 gehalten ist, die als ein aus einem elektrisch isolierenden Material hergestellter Bügel ausgebildet ist, in den der Plasmaerzeuger 11 von oben her eingesetzt ist.

Dieser Plasmaerzeuger 11 weist einen Verbindungsteil 13 aus einem elektrisch isolierenden Material, z.B. Keramik auf, der in seinem unteren Bereich kegelförmig verjüngend ausgebildet ist und an seiner unteren Stirnseite eine Öffnung 14 aufweist.

Diese Öffnung 14 ist von einer ringförmigen Anode 15 durchsetzt, die in üblicher Weise aus einem elektrisch leitenden und thermisch hoch belastbaren Material hergestellt ist und in ihrem Mündungsbereich eine Düsenöffnung 16 aufweist.

Die Anode 15 weist einen sich nach oben zu konisch erweiternden Bereich auf, der innen an dem Verbindungsteil 13 anliegt und der in einen zylindrischen Bereich übergeht.

An der oberen Stirnseite der Anode 15 liegt ein Zwischenteil 17 an, der ringförmig ausgebildet und aus einem elektrisch isolierenden Material, z.B. Keramik, hergestellt ist.

An der oberen Stirnseite des Zwischenteiles 17 liegt ein aus einem elektrisch gut leitenden Material, z.B. Kupfer, hergestellter Halteteil 18 an, in dem eine Kathode 19 eingepreßt ist, die aus einem elektrisch leitenden und thermisch hoch belastbaren Material, wie z.B. aus einer Wolfram-Ceroxid-Legierung hergestellt ist und in ihrem der Düsenöffnung 16 der Anode 15 nahen Endbereich konisch ausgebildet ist.

Die Anode 15, wie auch der Halteteil 18 sind zur Festlegung der gegenseitigen Lage der Kathode 10 und der Düsenöffnung 16 der Anode zweckmäßigerweise in den Verbindungsteil 13 eingepaßt.

Die Anode 15, der Zwischenteil 17 und der Halteteil 18 mit der eingepreßten Kathode 19 bilden dabei gemeinsam mit dem Verbindungsteil 13 einen Modul des Gerätes, der leicht in den Halter eingebaut und aus diesem wieder entfernt werden kann.

Auf der oberen Stirnseite des Halteteiles 18 liegt ein aus einem Isoliermaterial hergestellter Druckteil 20 an, der eine die Kathode 19 mit Spiel aufnehmende Bohrung 21 aufweist und über die Stirnseite des Verbindungsteiles 13 vorragt.

Dieser Druckteil 20 wirkt mit einem Deckel 22 zusammen der auf ein im der oberen Stirnseite des Verbindungsteiles 13 nahen Bereich angeordneten Außengewindes 23 aufgeschraubt ist.

Der Verbindungsteil 13 ist mit drei entlang einer Mantellinie angeordneten radialen Bohrungen 24, 25 versehen, von denen die Bohrungen 24 den Durchtritt der Ansätze 10 der Kontaktstifte 9 ermöglichen und im Bereich des Halteteiles 18, bzw. der Anode 15 liegen. Die Bohrung 25 ist im Bereich des Zwischenteiles 17 angeordnet und fluchtet mit einem radial verlaufenden Einlaß 26 des Zwischenteiles der zu einer durch die Innenwand des Zwischenteiles 17 begrenzten Kammer 27 führt, die von der Kathode 19 durchsetzt ist.

Dabei fluchtet die Bohrung 25 bei in den Halter 1 eingesetztem Plasmaerzeuger, der als Modul aufgebaut ist, auch mit der im Halter 1 vorgesehenen Gaszuführleitung 3.

Zum Einbau des als Modul aufgebauten Plasmaerzeugers 11 genügt es die Anschlußleitungen 6, deren Isoliermäntel 28 mit Spiel in den Bohrungen 4 des Einsatzes 2 des Halters 1 geführt sind, zurückzuziehen und den Plasmaerzeuger 11 von oben in den Bügel 12 einzusetzen. Danach können die Anschlußleitungen 6 losgelassen werden und die Kontaktstifte 9 rasten in die Bohrungen 24 des Verbindungsteiles 13 ein und sichern die Lage des Plasmaerzeugers 11 im Halter 1. Gleichzeitig werden sie mit ihren Stirnflächen mittels der Federn 8 an den Halteteil 8, bzw. die Anode 15 angepreßt und so ein guter elektrischer Kontakt hergestellt.

Beim Betrieb des Plasmaerzeugers 11 wird über die Gaszuführleitung 3 ein Gas, z.B. Helium, CO₂ u.a., in die Kammer 27 eingeleitet, das die Kathode 19 umspült und diese im Betrieb gleichzeitig kühlt. Dieses Gas strömt über die Düsenöffnung 16 aus.

Wird nun mittels eines Hochspannungsimpulses ein Lichtbogen zwischen der Anode 15 und der Kathode 19 gezündet, so bildet sich ein Plasma aus, das aus der Düsenöffnung 16 austritt und z.B. zum Herstellen einer Schweißnaht oder zum Schneiden von Materialien verwendet werden kann.

Ist die Kathode 19, bzw. deren kegeliger Endbereich soweit verschlissen, daß ein ordnungsgemäßer Betrieb des Plasmaerzeugers nicht mehr gewährleistet ist, so wird der als Modul aufgebaute Plasmaerzeuger 11 einfach ausgetauscht und durch einen neuen ersetzt. Der ausgetauschte Plasmaerzeuger 11 kann dann einem Recycleverfahren zugeführt werden.

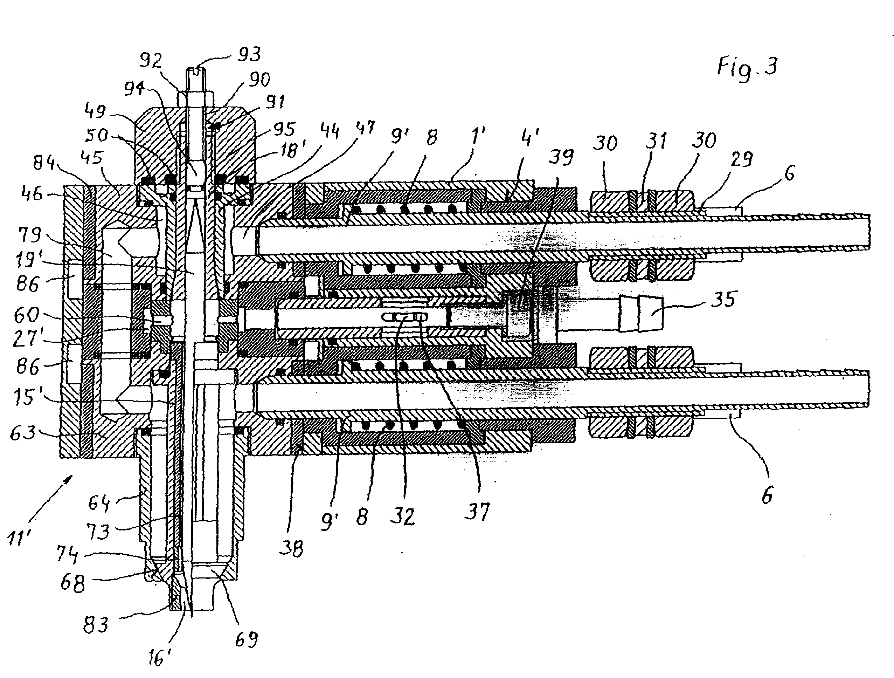

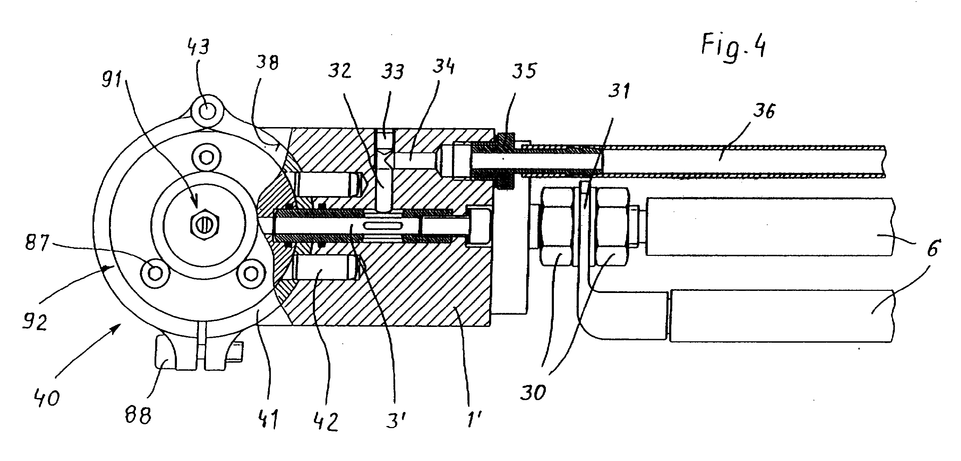

Bei der Ausführungsform nach der Fig. 3 ist ein Halter 1' vorgesehen, der Bohrungen 4' zur Aufnahme der Kontaktstifte 9' aufweist, wobei die Kontaktstifte 9' in axialer Richtung durchbohrt sind. Dabei sind die Kontaktstifte 9' in einem außerhalb des Halters 1' liegenden Bereich mit einem Außengewinde 29 versehen, auf dem Anschlußmuttern 30 aufgeschraubt sind, zwischen denen Kabelschuhe 31 von Anschlußleitungen 8 (Fig. 4) geklemmt sind.

Das hintere Ende der Kontaktstifte 9' ist für den Anschluß von Schläuchen ausgebildet, über die Kühlwasser zuführbar ist.

Weiters ist im Halter 1' eine Gaszuführleitung 3' gehalten, die, wie aus der Fig. 4 zu ersehen ist, über einen radialen Kanal 32, der mit einer Madenschraube 33 nach außen abgeschlossen ist, und eine in diese mündende axiale Bohrung 34, in der eine Schlauchtülle 35 eingeschraubt ist, mit einem Gasschlauch 36 verbunden ist, über den ein zur Erzeugung des Plasmas erforderliches Gas zuführbar ist.

Dabei weist die Gaszuführleitung 3' im Bereich des radialen Kanals 32 Schlitze 37 auf, über die das Gas in das Innere der Gaszuführleitung 3' einströmen kann. Dabei ist die Gaszuführleitung 3' mittels einer in diese eingreifende Schraube 39 in ihrer Lage gesichert ist.

Wie aus der Fig. 3 zu ersehen ist, ragen die Kontaktstifte 9' in ihrer federbelasteten Ruhestellung über die Stirnfläche 38 des Halters 1' hinaus und greifen in die Mantelfläche eines als Modul aufgebauten Plasamerzeugers 11' ein. Gleiches gilt auch für die Gaszuführleitung 3', die bei montiertem Plasmaerzeuger 11' in diesen eingreift.

Der als Modul aufgebauter Plasmaerzeuger 11' ist mittels einer Rohrschelle 40 gehalten, deren an der Stirnseite 38 des Halters 1' gehaltene feste Teil mit Stiften 42 gehalten ist. Dabei weist die Rohrschelle 40 ein Gelenk 43 auf, deren Achse senkrecht zur Achse des Halters 1' verläuft.

Beim Plasmaerzeuger 11' ist der Halteteil 18' der Kathode 19' durch eine Spannzange gebildet, die aus einem elektrisch gut leitenden Material hergestellt ist. Diese Spannzange ist in üblicher Weise in einem Aufnehmer 44 gehalten, der in einen Kontaktteil 45 eingeschraubt ist.

Dieser Kontaktteil 45 ist mit einer Kühlmittelkammer 46 versehen, die über einen radialen Kanal 47 mit einer Anschlußöffnung 48 verbunden ist. Dabei fluchtet diese Anschlußöffnung 48 bei im Halter 1' montiertem Plasmaerzeuger 11' mit den Kontaktstiften 9'.

Zum Spannen und Lösen der Spannzange 18' ist eine Spannmutter 49 vorgesehen, die über zwei Dichtungen 50 an der oberen Stirnfläche der Aufnahme 44 abgestützt ist, wodurch ein Austritt von Kühlflüssigkeit vermieden wird, wobei die Aufnahme 44 zur Abdichtung der Kühlmittelkammer 46 ebenfalls über eine Dichtung 51 an dem Kontaktteil 45 abgestützt ist.

Zur weiteren Abdichtung der Kühlmittelkammer des Kontaktteiles 45 ist ein O-Ring 52 vorgesehen, der in einer Nut einer Bohrung 53 eingesetzt ist, die von der Aufnahme 44 durchsetzt ist.

Zur Sicherung der axialen Einstellung der Kathode 19' beim Spannen der Spannzange 18' ist die Spannmutter 49 mit einer durchgehenden Gewindebohrung 90 versehen, in ein Anschlag 91 eingeschraubt ist, der in die Spannzange 18' eingreift. Dieser Anschlag 91 weist einen glatten Kopf 94 auf, in dem eine umlaufende Nut zur Aufnahme eines O-Ringes 95 eingearbeitet ist, der zur Abdichtung des Inneren der Spannzange 18'dient.

Zur Sicherung der Lage des Anschlages 91, der mittels eines in den stirnseitigen Schlitz 93 eingesetzten Schraubendrehers einstellbar ist, ist eine Kontramutter 92 vorgesehen, die gleichzeitig für eine drehfeste Verbindung zwischen dem Anschlag 91, an dem die Kathode 19' anliegt, und der Spannmutter 49 sorgt.

Durch den Anschlag 91 ist sichergestellt, daß beim Spannen der Spannzange die Kathode 19' von der Spannzange 18' nicht mehr gegenüber der Anode 15' axial bewegt werden kann, da die Spannmutter 49 an der Stirnfläche des Kontaktteiles 45 anliegt und die Anode 15'gegenüber dieser festgelegt ist.

Der Kontaktteil 45, der zur Kontaktierung der Kathode 19' dient, liegt unter Zwischenlage einer Dichtung 54 auf einem Zwischenteil 55, der aus einem elektrisch isolierenden Material, wie z.B. Keramik, hergestellt ist. Dieser Zwischenteil 55 bestimmt die Kammer 27' die über einen radialen Kanal 56 mit einer Anschlußöffnung 57 verbunden ist.

Dabei sind die radialen Kanäle 47 und 56 mit umlaufenden Nuten 58 versehen, in denen O-Ringe 59 angeordnet sind. Diese dienen zur Abdichtung der in diese Kanäle eingreifenden Kontaktstiften 9' bzw. der Gaszuführleitung 3'.

In der Kammer 27' ist ein Verteilring 59' angeordnet, der mit über den Umfang verteilt angeordnete Bohrungen 60 versehen, deren Durchmesser sich in beiden Drehrichtungen mit größer werdendem Winkel zum dem radialen Kanal 56 vergrößert. Dabei ist die axiale Bohrung des Verteilringes 59' von der Kathode 19' durchsetz. Dabei verbleibt zwischen der Innenwand des Zwischenteiles 55 und dem Verteilring 59' ein Ringraum 61.

Der Zwischenteil 55 ist über eine Dichtung 62 auf einen Anoden-Kontaktteil 63 abgestützt. In diesen Anoden-Kontaktteil 63 ist eine Spannhülse 64 in ein Innengewinde 65 eingeschraubt, wobei eine Dichtung 66 zwischen dem Anoden-Kontaktteil 63 und der Stirnfläche der Spannhülse 64 zwischengelegt ist.

Die Spannhülse 64 weist im Bereich ihres einen Endes eine konische Anlagefläche 67 auf, an der eine gegengleiche kegelige Mantelfläche 68 eines Kopfes 69 einer Anode 15' anliegt, die ebenso wie die Spannhülse 64 und der Anoden-Kontaktteil 63 aus einem elektrisch gut leitenden Material hergestellt ist.

Die Anode 15 liegt mit ihrem vom Kopf 69 abgekehrten Ende mit einem weiteren Kopf 70 auf, der unter Zwischenlage einer Dichtung 71 an einer Schulter des Anoden-Kontaktteiles 63 anliegt. Dabei durchsetzt die Anode 15' eine Kühlmittelkammer 46 des Anoden-Kontaktteiles 63.

Die Anode 15' ist in axialer Richtung durchbohrt, wobei in diese Bohrung 72 eine Hülse 73 eingesetzt ist, die aus einem elektrisch isolierenden Material, z.B. Keramik, hergestellt ist, und von der Kathode 19' durchsetzt ist.

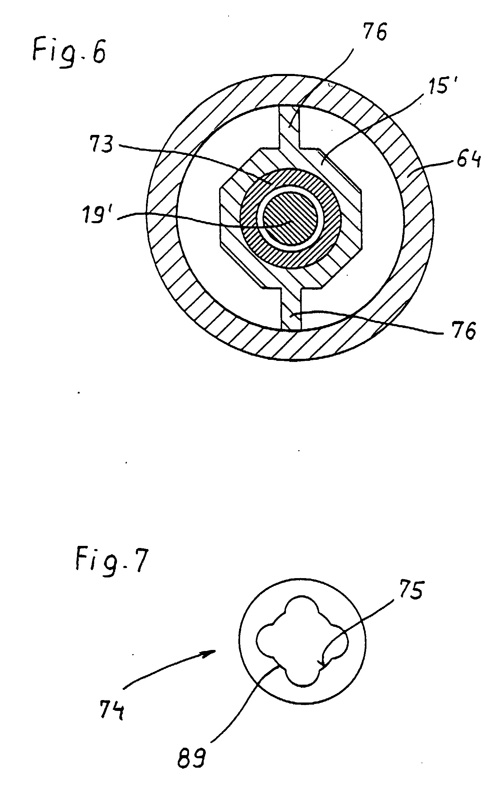

Weiters ist in der Bohrung 72 im der Mündung der Anode 15' nahen Bereich eine Zentrierhülse 74 eingesetzt, die in der Fig. 7 näher dargestellt ist und deren an Führungsrippen 89 vorgesehenen Führungsflächen 75 an der Mantelfläche der Kathode 19' anliegen.

Die Anode 15' weist, wie aus der Fig. 6 zu ersehen ist radial abstehende Leitrippen 76 auf, die sich, wie aus der Fig. 6 zu ersehen ist, von der einen sechseckigen Querschnitt aufweisenden Anode 15' bis zur Innenwand der Spannhülse 64 erstrecken und senkrecht zur Achse des radialen Kanals 47 stehen. Dabei erstrecken sich die Leitrippen 76 vom Kopf 70 weg gegen den Kopf 69 der Anode 15', wobei jedoch zwischen dem Kopf 69 und den Leitrippen 76 ein Strömungsweg 77 verbleibt.

Dadurch wird die Kühlmittelkammer 46, die einerseits vom Anoden-Kontaktteil 63 und der Spannhülse 64 begrenzt wird, durch die Leitrippen 76 unterteilt.

Die beiden Kühlmittelkammern 46 des Kontaktteiles 45 und des Anoden-Kontaktteiles 63 sind über einen Überströmkanal 78 miteinander verbunden.

Dieser Überströmkanal 78 setzt sich im wesentlichen aus axialen Bohrungen 79 in dem Kontaktteil 45, bzw. dem Anoden-Kontaktteil 63 und radialen, zu den radialen Kanälen 47 koaxialen Bohrungen 80 zusammen, die in die axialen Bohrungen 79 münden. Dabei ist der Zwischenteil 55 mit einer mit den axialen Bohrungen 79 fluchtenden Bohrung 81 versehen.

Dabei sind im Bereich der Bohrung 81 des Zwischenteiles 55 Dichtungen 82 vorgesehen.

Im Mündungsbereich der Anode 15' ist ein Einsatz 83 vorgesehen, der aus einem verschleißfesten Material hergestellt ist, z.B. aus einer Wolfram-Ceroxid-Legierung hergestellt ist.

Die beiden Kontaktteile 45 und 63 sind von Ringen 84 aus einem elektrisch isolierten Material umgeben, bzw. diese sitzen auf Krägen 85 auf.

Wie aus der Fig. 3 zu ersehen ist, weist die Rohrschelle 40 im Bereich der Krägen 85 der Kontaktteile 45 und 63 Ausnehmungen 86 auf, wodurch ein Kurzschluß zwischen den beiden Kontaktteilen 45 und 63 vermieden wird.

Beim Betrieb wird Gas, z.B. Helium, CO₂ od. dgl. in die Kammer 27' eingeblasen und ein Lichtbogen zwischen der Kathode 19' und der Anode 15' durch einen Hochspannungsimpuls gezündet. Das sich auf die Weise ausbildende Plasma tritt durch die Düsenöffnung 16' aus.

Die Kathode 19' ist an ihren beiden Enden kegelig ausgebildet.

Die beiden Kontaktteile 45 und 63 und der Zwischenteil 55 sind mittels der aus der Fig. 4 ersichtlichen Schrauben 87 miteinander verbunden und stellen die Verbindungsteile dar, durch die ein modularer Aufbau des Plasmaerzeugers 11' sichergestellt ist.

Sobald die Kathode 19' abgenutzt ist, so kann der als Modul ausgebildete Plasmaerzeuger 11' durch Lösen der Spannschraube 88 und Öffnen der Rohrschelle 40 ausgebaut werden, wonach die Spannmutter 49 gelöst und die Kathode 19' aus der Spannzange entnommen werden kann. Anschließend kann die Kathode gewendet, oder deren kegelige Enden nachgeschliffen werden. Anschließend kann die Kathode in Bezug auf die Anode 15' mittels einer Lehre eingestellt wird. Anschließend wird der Anschlag 91 bei geöffneter Spannzange 18' eingestellt und danach die Kathode 19' mittels der Spannmutter 49 in der Spannzange 18' wieder fixiert, wonach der Modul 11' wieder montiert werden kann.

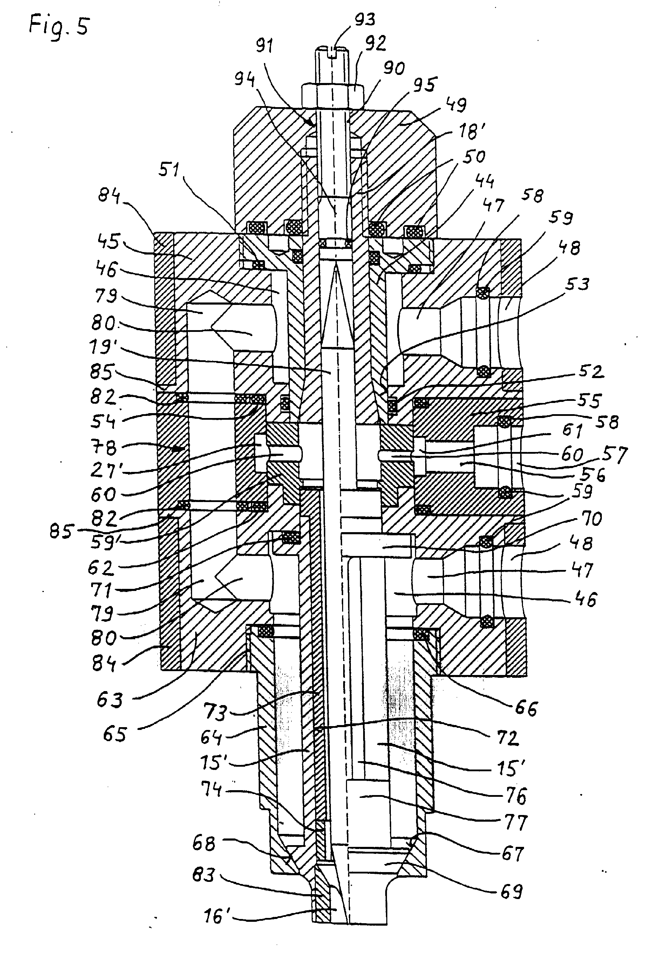

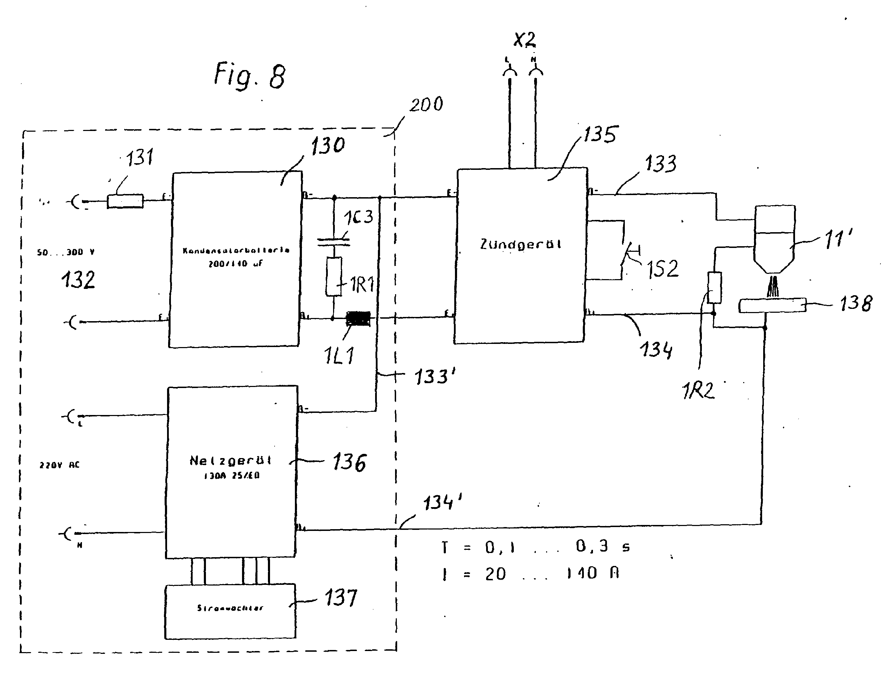

Eine Spannungsversorgung für einen Plasmabrenner 11, 11' nach den Fig. 1 bis 7 ist in der Fig. 8 dargestellt, wobei die Spannungsversorgung 200 zur Erzeugung eines Impulsplasmas, wie auch eines Flow-Plasmas geeignet ist.

Dabei ist eine Kondensatorbatterie 130 über einen Ladewiderstand 131 mit den Anschlüssen X1 einer regelbaren Gleichspannungsquelle 132 verbunden. Die Kondensatorbatterie 130 weist einen nicht dargestellten fest angeschlossenen Kondensator und einen über einen Schalter zu diesem parallel zuschaltbaren Kondensator auf, wobei es sich in beiden Fällen auch um Gruppen von Kondensatoren handeln kann.

Diese Kondensatorbatterie 130 ist über Anschlußleitungen 133, 134 mit dem Plasmabrenner 11', bzw. dessen in der Fig. 8 nicht dargestellten Kathode und Anode verbunden.

Parallel zur Kondensatorbatterie 130 ist ein R/C-Glied geschaltet, das durch einen Kondensator 1C3 und einen Widerstand 1R1 gebildet ist. Dieses R/C-Glied bildet in Verbindung mit der in der Anschlußleitung 134 geschalteten Drossel 1L1 einen HF-Sperrkreis, der zum Schutz der Kondensatorbatterie 130 vor HF-Signalen vorgesehen ist.

Weiters ist noch ein Zündgeräte 135 an die Anschlußeitungen 133, 134 angeschlossen, wobei diese durch das Zündgerät 135 auch hindurchgeführt sind. Dieses Zündgerät 135 ist eingangsseitig mit einer Wechselspannungsquelle X2 verbunden und mit einem Triggerschalter 1S2 versehen, durch dessen Betätigung ein Zündimpuls auslösbar ist.

Weiters ist die Anschlußleitung 134 mit einem hochohmigen Widerstand 1R2 und einem Werkstück 138 verbunden. Dabei ist dieser Widerstand 1R2 weiters mit der Anode 15' des Plasmabrenners 11' verbunden. Die Anschlußleitung 133 ist dabei mit der Kathode 19' des Plasmabrenners 11' verbunden.

Über den Widerstand 1R2 liegt daher auch die Anode al5' auf dem Potential des Werkstückes 138. Dadurch kommt es zur Ausbildung eines elektrischen Feldes zwischen der Anode und der Kathode und somit zu einer Ionisierung des Ringspaltes zwischen der Anode 15' in deren Mündungsbereich und der Kathode 19'. Dabei kommt es jedoch aufgrund des hochohmigen Widerstandes 1R2 jedoch zu keiner Ausbildung eines Lichtbogens zwischen der Anode 15' und Kathode 19', da sich kein ausreichender Stromfluß über den ionisierten Kanal ausbilden kann.

Das ionisierte Plasmagas wird durch das nachströmende Plasmagas in den Bereich zwischen der Kathode 19', die aus der dem Werkstück 138 zugekehrten Stirnfläche des Plasmabrenners 11' vorragen kann, und dem Werkstück 138 gedrängt und bewirkt eine rasche Zündung eines Lichtbogens, wodurch sich ein Plasma bildet.

Ist ein Impulsplasma erwünscht, d.h. es sollen lediglich einzelne kurze Plasmimpulse in einer mehr oder weniger raschen Abfolge erzeugt werden, z.B. zur Herstellung eine Punktschweißnaht mit sehr kleinen Abständen zwischen den einzelnen Schweißpunkten, so wir ausschließlich mit der Kondensatorbatterie gearbeitet. Dabei kommt es zur Aufladung der Kondensatorbatterie 130 entsprechend der eingestellten Spannung der Gleichspannungsquelle 132, die z.B. zwischen 50V und 300V einstellbar ist, und der durch die Kapazität der Kondensatorbatterie 130 und die Leitungswiderstände und den Ladewiderstand mitbestimmten Zeitkonstante.

Erreicht die Kondensatorbatterie 130 eine Spannung, die unter Berücksichtigung der oben erläuterten Ionisierung des Bereichs zwischen der Kathode 19' und dem Werkstück 138 der Überschlagsspannung der Kathoden-Werkstück-Strecke 19', 138 entspricht, so kommt es zum Zünden eines Lichtbogens und damit zur Bildung von Plasma im Bereich zwischen der Kathode 19' und dem Werkstück 138.

Gleichzeitig entlädt sich die Kondensatorbatterie 130 entsprechend der durch deren Kapazität und den Leitungswiderständen und dem Widerstand des Lichtbogens gegebenen Zeitkonstante. Sinkt durch diese Entladung die Spannung der Kondensatorbatterie 130 unter die Brennspannung des Lichtbogens ab, so erlischt dieser und die Kondensatorbatterie 130 lädt sich wieder auf, wodurch sich der beschriebene Vorgang wiederholt und sich eine Frequenz ergibt, die durch Lade- und Entlade-Zeitkonstanten bestimmt ist. Dabei ist der Betrieb des Zündgerätes nicht erforderlich.

Für bestimmte Anwendungen kann es erwünscht sein, den Zündzeitpunkt des Lichtbogens genau zu bestimmen oder einen solchen vor Erreichung der Überschlagsspannung der Anoden-Kathoden-Strecke 15', 19' auszulösen, um besonders kurze Plasmaimpulse erzeugen zu können.

In diesem Fall wird durch Betätigung des Triggerschalters 1S2 ein Zündimpuls ausgelöst, der zu einer raschen und weitgehenden Ionisierung des Bereichs zwischen der Kathode 19' und dem Werkstück 138 führt und damit zur Zündung eines Lichtbogens führt, ohne daß die Kondensatorbatterie 130 eine der Überschlagsspannung dieser Strecke entsprechende Spannung erreicht hat. Auf diese Weise kann auch das Tastverhältnis, das z.B. zwischen 1:10 und 1:100 und darüber hinaus gewählt werden kann, entsprechend verändert werden und das Verhältnis zwischen der Brenndauer des Lichtbogens und dessen Brennpause während eines Zyklusses im Sinne einer Verlängerung der Brennpause verändert werden, da die Energie der Zündimpulse des Zündgerätes 135 zwar zum Zünden des Lichtbogens, nicht aber zu dessen Aufrechterhaltung ausreicht, wenn die Spannung der Kondensatorbatterie 130 unter der Brennspannung des Lichtbogens abgesunken ist.

Für Anwendungen bei denen eine sehr großes Tastverhältnis oder überhaupt ein ständiges Plasma, eben ein Flow-Plasma erwünscht ist, weist die Spannungsversorgung 200 noch ein Netzgerät 136 auf das an ein Wechselspannungsnetz angeschlossen und mit einer Gleichrichterschaltung versehen ist. Dem Netzgerät 136 ist ebenfalls ein Sperrkreis zugeordnet, der jedoch nicht dargestellt ist.

Dabei ist die an den negativen Pol des Ausgangs des Netzgerätes angeschlossene Anschlußleitung 133' mit an den negativen Pol der Kondensatorbatterie 130 angeschlossenen Anschlußleitung 133 verbunden und die an den positiven Pol des Netzgerätes 136 angeschlossene Anschlußleitung 134' ist mit einem Werkstück 138 und dem hochohmigen Widerstand 1R2 verbunden.

Weiters ist ein Stromwächter 137 an das Netzgerät 136 angeschlossen.

Im Betrieb liefert das Netzgerät 136, sobald ein Lichtbogen in der oben beschriebenen Weise gezündet ist, ebenfalls Strom in den Plasmabrenner 11', wobei der Stromkreis für das Netzgerät 136 über die Kathode 19' des Plasmabrenners, das Plasma und das Werkstück 138, sowie die Anschlußleitungen 133', 133, 134' geschlossen ist.

Sobald der Lichtbogen im Plasmabrenner 11' aufgrund des Absinkens der Spannung der Kondensatorbatterie 130 unter die Brennspannung des Lichtbogens erlischt, ist auch der Stromkreis für das Netzgerät 136 unterbrochen, dessen Ausgangsspannung nicht ausreicht, um einen Lichtbogen zwischen der Kathode und dem Werkstück 138 aufrecht zu erhalten.

Durch entsprechende Wahl der Versorgungsspannung der Kondensatorbatterie 130 und des Netzgerätes, das über eine variable Spannungsquelle, z.B. einen Regel-Transformator mit einer Vielzahl von Spannungsabgriffen mit Wechselspannung versorgt ist, ist ein fließender Übergang von Impulsplasma mit einem einstellbaren Tastverhältnis und einem ständig brennenden Flow-Plasma möglich, bei dem für einen Arbeitsgang nur einmal ein Lichtbogen gezündet werden muß, der durch das Netzgerät 136 ständig mit ausreichender Energie versorgt wird um nicht zu erlöschen.

Grundsätzlich kann die Schaltung nach der Fig. 8 auch für andere Plasmabrenner, z.B. einen Plasmabrenner 11 nach den Fig. 1 und 2 oder einen anderen beliebigen Plasmabrenner verwendet werden.

## Patentansprüche

1. Einrichtung zum Plasmaschweißen mit einem Schweißbrenner (11, 11') mit einer von Plasmagas durchströmbaren Düse (16, 16'), die aus einem elektrisch gut leitenden Material hergestellt ist und konzentrisch zu einer gegenüber der Düse (16, 16') elektrisch isolierten Elektrode (19, 19') angeordnet ist, die mit einem Pol einer Gleichspannungsquelle (200) verbunden ist, und einem mit dem zweiten Pol der Gleichspannungsquelle (200) verbunden Anschluß für ein zu verschweißendes Werkstück (138), wobei dieser Anschluß mit dem Werkstück (138) direkt und über einen elektrischen Widerstand (1R2) mit der Düse (16, 16') verbunden ist und eine HF-Zündeinrichtung (135) mit der Elektrode (19, 19') und dem Werkstück (138) in Verbindung steht, **dadurch gekennzeichnet,** daß der mit der Düse (16, 16') verbundene Widerstand (1R2) als ein hochohmiger Widerstand ausgebildet ist und einen Widerstandswert im Bereich von 10³ bis 10⁶ Ohm, vorzugsweise 10⁵ Ohm, aufweist.

2. Einrichtung nach Anspruch 1, **dadurch gekennzeichnet,** daß die Elektrode (19') des Schweißbrenners (11') die Düse (16') durchsetzt, die vorzugsweise kegelmantelförmig ausgebildet ist.
